# EUROPÄISCHE PATENTSCHRIFT

(11) **EP 1 664 191 B1**
(45) Veröffentlichungstag und Bekanntmachung des Hinweises auf die Patenterteilung: **24.11.2010**
(21) Anmeldenummer: 04740621.0
(22) Anmeldetag: 03.07.2004
(51) Int. Cl.: C08L 33/00, C09D 133/00

(54) **VERFAHREN ZUR OBERFLÄCHENVERGÜTUNG VON WERKSTOFFEN DURCH AUFBRINGEN INSBESONDERE TRANSPARENTER SCHICHTEN AUF BASIS VON POLYMETHACRYLATEN**
METHOD FOR SURFACE HARDENING SUBSTANCES BY APPLICATION OF PARTICULARLY TRANSPARENT POLYMETHACRYLATE LAYERS
PROCEDE POUR TRAITER EN SURFACE DES MATERIAUX PAR APPLICATION EN PARTICULIER DE COUCHES TRANSPARENTES A BASE DE POLYMETHACRYLATES

(30) Priorität: 26.09.2003 DE 10345045
(43) Veröffentlichungstag der Anmeldung: 07.06.2006
(73) Patentinhaber: Evonik Röhm GmbH, 64293 Darmstadt (DE)
(72) Erfinder: NUMRICH, Uwe, 64846 Gross-Zimmern (DE); WICKER, Michael, 64342 Seeheim-Jugenheim (DE); NEUHÄUSER, Achim, 64569 Nauheim (DE); KROHMER, Christoph, 64589 Stockstadt (DE); DICKHAUT-BAYER, Günther, 64560 Riedstadt (DE)
(86) Internationale Anmeldenummer: PCT/EP2004/007280
(87) Internationale Veröffentlichungsnummer: WO 2005/040273

(56) Entgegenhaltungen:
- DE-C- 3 908 626

## Beschreibung

Die vorliegende Erfindung ist auf ein Verfahren zur Herstellung von Verbundwerkstoffen gerichtet. Insbesondere beschäftigt sich die Erfindung mit einem Verfahren zur Oberflächenvergütung von Werkstoffen mittels Polymethacrylatschichten. Die zur Oberflächenvergütung verwendeten Polymerschichten auf Basis von Polymethacrylaten werden dabei aus bestimmten Polymethacrylat-Copolymeren hergestellt und in einer bestimmten Art und Weise auf die Substrate aufgebracht.

Oberflächenvergütete Gegenstände sind bekannte Fabrikationserzeugnisse, die für viele diverse Verwendungszwecke wünschenswert sind, da sie durch die vorteilhafte Kombination von physikalischen Eigenschaften gekennzeichnet sind, welche die einzelnen Materialkomponenten nicht besitzen.

Von Polymethacrylaten ist bekannt, dass sie bekanntlich den oberflächenvergüteten Materialien in hohem Maße erwünschte Eigenschaften, insbesondere hohe Transparenz, Kratzfestigkeit und Witterungsbeständigkeit verleihen.

Es hat daher nicht an Versuchen gefehlt, z.B. PMMA-beschichtete Materialien herzustellen. Einen Problempunkt bei diesen Beschichtungen bildet jedoch die Tatsache, dass oftmals keine oder nur eine geringe Haftung zwischen den verschiedenartigen Schichten besteht, was zur einer frühzeitigen Ablösung der Schutzschicht oder zumindest zu einer eingeschränkten Verarbeitbarkeit der Verbundwerkstoffe führt.

Eine ideale Schutzschicht haftet gut auf dem Untergrund, ist gleichzeitig hart und flexibel, beständig gegen Witterungseinflüsse, Lösungsmittel, Abrieb und Hitze. Es ist schwierig, ein Optimum all dieser Eigenschaften zu erreichen, da die Verbesserung einer Eigenschaft meist zu Lasten anderer geht. Gerade bei der Bearbeitung und Formgebung von bereits oberflächenvergüteten Substraten ist eine hohe Elastizität und Haftung wünschenswert, um ein Abplatzen der Schutzschicht an den Knickstellen zu verhindern.

Gleichzeitig sollte die Schutzschicht hart genug sein, um gegen mechanische Einwirkungen beständig zu sein.

Um eine ausreichende Haftung zwischen den meist chemisch verschieden aufgebauten Werkstoffen und der Oberflächenvergütung zu gewährleisten, kann auf die Mithilfe von Klebern zurückgegriffen werden. Weiterhin hat es sich diesbezüglich als vorteilhaft erwiesen, zwischen dem Substrat und der Schutzschicht (genannt: Capstock) kovalente Bindungen aufzubauen Schultz et al., J. Appl. Polym. Science 1990, 40, 113-126; Avramova et al. 1989, 179, 1-4). Dies wird z.B. durch Einbau spezieller Monomere (Reaktiv-Monomere) in die Polymermatrix der Schutzschicht erreicht, die fähig sind, mit den Resten auf der Oberfläche des Substrats oder dem darauf haftenden Kleber zu reagieren.

In der EP911148 werden Kleber vorgestellt, die u.a mit "Reaktiv-Monomeren" versehen sind und sich für die Anheftung von LCP-Filmen auf Polyethylensubstraten eignen. Die Mehrfachfilme werden über den Schmelzpunkt der höchstschmelzenden Einzelkomponente erwärmt, um so eine innige Verschmelzung der einzelnen Filme miteinander zu erreichen.

Die EP271068 berichtet von Blends aus Polyvinylfluoriden und PMMA-GMA-Copolymeren, welche bei erhöhten Temperaturen auf modifizierte Styrolpolymerplatten laminiert werden.

In der DE 10010533 wird eine Mehrschichtfolie vorgeschlagen, die aus zwei Schichten besteht, wobei die erste Schicht aus Acrylharz ist und die zweite Schicht jeweils ein Copolymer aus entweder einem Acrylharz und einem Copolymer auf Olefinbasis, erhalten durch Copolymerisation eines Olefins und mindestens eines Monomeren, ausgewählt aus z.B. ungesättigten Carbonsäuren, Carbonsäureanhydriden oder glycidylgruppenenthaltenden Monomeren. Diese Folie soll eine ausgezeichnete Schmelzhaftung auf Harzsubstraten auf Polyolefinbasis aufweisen.

Es werden bei diesem Verfahren also zwei Polymerschichten aufeinanderlaminiert und anschließend mit der die "Reaktiv-Monomere"- enthaltenden Seite auf das zu laminierende Polyolefinharz z.B. mittels eines Klebformverfahrens aufgebracht.

In der DE4337062 werden Metallbleche mit Dreifachschichten aus themoplastischen Harzen derart laminiert, dass während des Extrusionsbeschichtungsprozederes eine Temperatur von mindestens 30°C oberhalb der Glastemperatur der inneren Harzschicht eingestellt wird.

Die japanische Anmeldung H9-193189 beschreibt ebenso wie die DE10010533 einen Mehrschichtverbund aus einer ersten Schicht, welche aus einem thermoplastischen PMMA-Polymer besteht, einer zweiten Schicht bestehend aus einem reaktiv-modifiziertem Polyolefin und einer dritten Schicht, welche aus einem eingefärbtem Olefinpolymer aufgebaut ist.

Um die gewünschten oben angesprochenen vorteilhaften Eigenschaften der Materialien wie hohe und dauerhafte Verbundhaftung etc. zu erhalten, bietet der bekannte Stand der Technik lediglich spezielle Einzellösungen an, die sich nicht verallgemeinern lassen oder die vom apparativen oder logistischen Aufwand nachteilig erscheinen, wie insbesondere das Verarbeiten von Mehrfachschichtmaterialien als Schutzschicht. Ausgehend von diesem bekannten Stand der Technik besteht deshalb immer noch ein Bedürfnis an neuen Oberflächenvergütungstechniken, welche für technische Anwendungen oder in der Herstellung Vorteile bieten.

Aufgabe der vorliegenden Erfindung war daher die Angabe eines weiteren Verfahrens zur Oberflächenvergütung von Werkstoffen und der mittels dieses Verfahrens hergestellten Verbundwerkstoffe. Das Verfahren sollte es dem Fachmann insbesondere ermöglichen, eine polymethacrylatbasierte Schutzschicht (Capstock) in möglichst einfacher und effizienter Weise auf eine möglichst große Vielzahl von Substratmaterialien aufbringen zu können, wobei die oben angesprochenen vorteilhaften und gewünschten Eigenschaften nach Möglichkeit voll ausgebildet werden. Ein ganz besonderes Augenmerk sollte darauf gerichtet sein, dass die Variabilität an Substratmaterialien nicht zu Lasten der Effizienz und Handhabbarkeit des erfindungsgemäß im technischen Maßstab angewandeten Verfahrens gereicht.

Die Aufgabe wird gelöst durch ein Verfahren mit den Merkmalen des vorliegenden Anspruchs 1. Bevorzugte Ausführungsformen des erfindungsgemäßen Verfahrens können den von Anspruch 1 abhängigen Unteransprüchen entnommen werden. Anspruch 6 schützt die dergestalt hergestellten Verbundwerkstoffe.

Dadurch, dass in einem Verfahren zur Oberflächenvergütung von Werkstoffen, die Oberflächenvergütung auf mindestens einer thermoplastischen Polymethacrylatschicht basiert, welche erhältlich ist durch:
Vermischen von Polymerisaten ausgehend von polymerisierten Monomermischungen a. und b.,
wobei a. aufweist:
   A) 20 bis 100 Gew.-% Methylmethacrylat,
   B) 0 bis 80 Gew.-% eines von Methylmethacrylat verschiedenen (Meth)acrylats der Formel I, 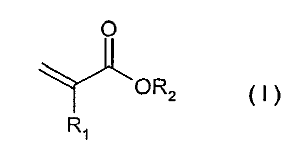
   worin
   R₁ für Wasserstoff oder Methyl und 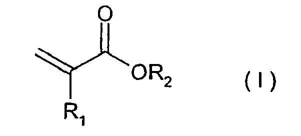 R₂ für einen linearen oder verzweigten Alkylrest oder Cycloalkylrest mit 1 bis 18 Kohlenstoffatomen oder für Phenyl oder Naphthyl steht,
C) 0 bis 40 Gew.-% eines weiteren von a.A) und a.B) verschiedenen mit diesen jedoch copolymerisierbaren ungesättigten Monomers und
wobei (a.A) bis (a.C) zusammen 100 Gew.-% ergeben, und zu 100 Gew.-Teilen dieser polymerisierten Mischung 0-80 Gew.-Teile weiterer Polymere sowie üblich Zuschläge in Mengen von 0 bis 150 Gew.-Teilen zugegeben werden;
und b. aufweist:
A) 20 bis 99 Gew.-% eines Methyl(meth)acrylats der Formel I,
   worin
   R₁ für Wasserstoff oder Methyl und
   R₂ für einen linearen oder verzweigten Alkylrest oder Cycloalkylrest mit 1 bis 18 Kohlenstoffatomen oder für Phenyl oder Naphthyl steht,
B) 1 bis 80 Gew.-% eines oder mehrerer ethylenisch ungesättigter von b.A) unterschiedlicher mit (b.A) copolymerisierbarer "Reaktiv-Monomere", wobei
   (b.A) und (b.B) zusammen 100 Gew.-% ergeben und zu 100 Gew.-Teilen dieser polymerisierten Mischung 0-80 Gew.-Teile weiterer Polymere sowie übliche Zuschläge in Mengen von 0 bis 150 Gew.-Teilen zugegeben werden;
und man die Polymethacrylatschicht auf den Werkstoff bei Temperaturen aufbringt, die es erlauben, eine chemische Verbindung der Polymethacrylatschicht mit dem Werkstoff herzustellen, gelangt man sehr vorteilhaft und überraschenderweise äußerst elegant zur Lösung der gestellten Aufgabe. Das erfindungsgemäße Verfahren erlaubt die Oberflächenvergütung von einer Vielzahl von Werkstoffen ohne Einsatz von Mehrschichtsystemen oder die Verwendung von Klebern, indem die Polymethacrylschicht aus einem Blend von zwei Polymeren auf Poly(meth)acrylatbasis aufgebaut ist, wobei der eine Bestandteil der Oberflächenvergütung die Eigenschaften reinen Polymethacrylats verleiht und der andere Teil das entsprechende Mittel zur Anbindung dieser Schicht an das Substrat bereithält. Die Ausbildung der aktiven chemischen Vernetzung der Polymerschicht mit dem Substrat erfolgt dabei durch die erhöhte Temperatur beim Vergütungsprozess, wobei neben dem Aufbau chemischer Bindungen auch eine gewisse Interpenetration von Substrat und Polymerschicht (insbesondere bei porösen, rauhen oder faserigen Substratmaterialien) haftungsunterstützend wirken kann.

Die Komponente a.A) ist eine essentielle Komponente. Es handelt sich um Methylmethacrylat, welches 20 bis 100 Gewichtsprozent der polymerisierbaren Mischung a. ausmacht, aus welchen die Polymerschicht erhältlich ist. Falls ihr Anteil 100 Gewichtsprozent ausmacht handelt es sich bei dieser Mischung um PMMA-Homopolymeres. Ist der Anteil geringer als 100 Gewichtsprozent liegt ein Co- oder Terpolymer aus 3 oder mehr Monomersorten vor. Die polymerisierte Mischung a. ist dann ein Co- oder Terpolymerisat.

Die Komponente a.B) ist dementsprechend optional. Es handelt sich um einen Acrylsäure- oder Methacrylsäureester, welcher vom Methylmethacrylat verschieden ist. Unter linearen oder verzweigtem (C₁-C₁₈)-Alkylrest versteht sich ein Umfang an Alkylresten, der angefangen bei Methyl- über Ethyl- bis hin zu einem 18-C-Atome umfassenden Radikal reicht. Mitumfasst sind auch sämtliche Bindungsisomere, welche innerhalb der Gruppe denkbar sind. Besonders genannt seien das Butylmethacrylat, 2-Ethylhexylmethacrylat, Cyclohexylmethacrylat, Phenylmethacrylat sowie das Naphthylmethacrylat.

Bevorzugt werden in den Mischungen a.B) (Meth)acrylate eingesetzt, worin der Rest R₂ des (Meth)acrylats der Formel I einen linearen oder verzweigten (C₁-C₈)-Alkylrest umfasst. Hiervon wiederum sind der Methyl-, Ethyl- oder n-Butylrest für R₂ besonders geeignet.

Die Schreibweise "(Meth)acrylat" bedeutet im Rahmen der Erfindung Acrylat und/oder Methacrylat.

Die polymerisierbare Komponente a.C) zum Erhalt der Polymethacrylatschicht ist optional. Unter von a.A) und a.B) verschiedenen Monomeren versteht der Fachmann z.B. Styrol und seine Derivate, Vinylester wie z. B. Vinylacetat, Vinylpropionat, Vinylester höherer Alkylsäuren, Vinylchlorid, Vinylfluorid, Olefine wie z. B. Ethen, Propen, Isobuten und dergleichen.

Weiterhin enthalten die polymerisierten Mischungen a. bzw. b. gewöhnlich noch an sich bekannte Zuschläge in Mengen bis zu 150 Gew.-Teilen (pro 100 Gew.-Teile a.A) - a.C) bzw. b.A) und b.B)). Genannt seien beispielsweise Calciumcarbonat (Kreide), Titandioxid, Titandioxid, Calciumoxid, Perlit, gefällte und gecoatete Kreiden als rheologisch wirksame Additive, ferner ggf. Thixotropierungsmittel wie z. B. pyrogene Kieselsäure. Die Korngröße liegt meist im Bereich 5 bis 25 µm. Die Mischung a. bzw. b. kann anwendungsbedingt noch an sich bekannte Hilfsstoffe wie Haftvermittler, Netzmittel, Stabilisatoren, Verlaufsmittel, Treibmittel in Anteilen von 0 bis 5 Gew.-% (bezogen auf die Mischungen a.A) bis a.C) bzw. b.A) und b.B)) enthalten. Erwähnt sei z. B. Calciumstearat als Verlaufsmittel.

Der Vollständigkeit halber sei erwähnt, dass den polymerisierten Mischungen a. und/oder b. auch weitere Komponenten bzw. Polymere wie Schlagzähmodifikatoren und schlagzäh-modifizierte PMMA-Formmassen zugemischt sein können (DE3842796 und DE19813001). Vorzugsweise enthalten die polymeren Mischungen a. und/oder b. auch weitere in technischen Prozessen verwendete Polymere, welche u.a. ausgewählt sein können aus der Gruppe der Polyvinylidendifluoride (PVDF), PVC, Polyethylene, Polyester, Polyamide. Ganz besonders bevorzugt ist der Einsatz von Vinylidenfluoridbasierenden Fluorpolymeren in diesem Zusammenhang (WO0037237)

Die Komponente b.A) umfasst die Summe der Komponenten a.A) und a.B).

Die Komponente b.B) in der Mischung b. ist ein "Reaktiv-Monomer", das haftungsverbessernde Eigenschaften besitzt. Unter den haftungsverbessernden Monomeren (Reaktiv-Monomere) als Bestandteile der Polymethacrylate seien solche radikalisch polymerisierbaren Monomeren verstanden, welche funktionelle Gruppen besitzen, die mit den Materialien, die beschichtet werden sollen, in Wechselwirkung treten können. Eine derartige Wechselwirkung soll zumindest durch eine chemische (kovalente) Bindung bedingt sein. Sie kann zudem z. B. durch Wasserstoffbrückenbildung, Komplexierung, Dipolkräfte oder thermodynamische Verträglichkeit (Verschlingen der Polymerketten) u. ä. unterstützt werden. An diesen Wechselwirkungen sind in der Regel Heteroatome wie Stickstoff oder Sauerstoff beteiligt. Genannt seien als funktionale Gruppen die Amino-, insbesondere die Dialkylamino-, (cyclische) Amid-, Imid-, Hydroxy-, (Ep)Oxy-, Carboxyl-, (Iso)Cyano-Gruppe. Derartige Monomere sind an sich bekannt (vgl. H. Rauch Puntigam, Th. Völker, Acryl- und Methacrylverbindungen, Springer-Verlag 1967; Kirk-Othmer, Encyclopedia of Chemical Technology, 3rd. Ed., Vol. 1, pp. 394-400, J. Wiley 1978;
DE-A 25 56 080; DE-A 26 34 003).

Vorzugsweise gehören die haftungsverbessernden Monomeren daher der Monomerklasse der stickstoffhaltigen Vinylheterocyclen mit vorzugsweise 5-Ringen neben 6-Ringen, und/oder der copolymerisierbaren vinylischen Carbonsäuren und/oder der Hydroxyalkyl-, Alkoxyalkyl-, Epoxy- und der Aminoalkyl-substituierten Ester oder Amiden der Fumar- oder Malein- bzw. Itacon- oder Acryl- und Methacrylsäure an.

Als Stickstoff-heterocyclische Monomere seien insbesondere solche aus der Klasse der Vinylimidazole, der Vinyllactame, der Vinylcarbazole und der Vinylpyridine genannt. Beispiele, die keinerlei Beschränkung darstellen sollen, für diese monomeren Imidazolverbindungen sind N-Vinyl-imidazol (auch Vinyl-1-imidazol genannt), N-Vinyl-methyl-2-imidazol, N-Vinyl-ethyl-2-imidazol, N-Vinyl-phenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5,5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allylcaprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)carbazol. Unter den copolymerisierbaren vinylischen Carbonsäuren seien insbesondere die Maleinsäure, Fumarsäure, Itaconsäure bzw. geeignete Salze, Ester oder Amide derselben genannt.

Ferner seien die folgenden epoxy-, oxy- bzw. alkoxysubstituierten Alkylester der (Meth)acrylsäure angeführt: Glycidylmethacrylat, 2-Hydroxyethyl(meth)acrylat, Hydroxypropyl(meth)acrylat, 2-Methoxy-ethyl(meth)acrylat, 2-Ethoxyethyl(meth)acrylat, 2-Butoxyethyl(meth)acrylat, 2-(2-Butoxyethoxy)ethylmeth-acrylat, 2-(Ethoxyethyloxy)ethyl(meth)acrylat, 4-Hydroxybutyl(meth)acrylat, 2-[2-(2-Ethoxy-ethoxy)ethoxy]-ethyl(meth)acrylat, 3-Methoxybutyl-1-(meth)acrylat, 2-Alkoxymethylethyl(meth)acrylat, 2-Hexoxyethyl(meth)acrylat.

Weiterhin seien die folgenden aminsubstituierten Alkylester der (Meth)acrylsäure genannt:
2-Dimethylaminoethyl(meth)acrylat, 2-Diethylaminoethyl-(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)-acrylat, 2-tert.-Butylaminoethyl(meth)acrylat, 3-(Dimethylamino)propyl-(meth)acrylat, 2-(Dimethylaminoethoxyethyl)-(meth)acrylat.

Als Vertreter der (Meth)acrylamide seien beispielsweise die folgenden Monomeren genannt:
N-Methyl(meth)acrylamid, N-Dimethylaminoethyl(meth)-acrylamid, N-Dimethylaminopropyl(meth)acrylamid, N-Isopropyl(meth)acrylamid, N-tert.-Butyl(meth)acrylamid, N-Isobutyl(meth)acrylamid, N-Decyl(meth)acrylamid, N-Cyclohexyl(meth)acrylamid, N-[3-(Dimethylamino)2,2-dimethylpropyl]-methacrylamid, N-[2-Hydroxyethyl](meth)-acrylamid.

Vorteilhafterweise werden "Reaktiv-Monomere" ausgewählt aus der Gruppe enthaltend GMA (Glycidylmethacrylat), Maleinsäurederivate, wie beispielsweise Maleinsäure, Maleinsäureanhydrid (MSA), Methylmaleinsäureanhydrid, Maleinimid, Methylmaleinimid, Maleinsäureamide (MSA), Phenylmaleinimid und Cyclohexylmaleinimid, Fumarsäurederivate, Methacrylsäureanhydrid, Acrylsäureanhydrid in der Mischung b. eingesetzt.

Das Verhältnis der polymerisierten Monomermischungen a. und b. in der polymethacrylatbasierten Oberflächenvergütung kann vom Fachmann beliebig und angepasst auf den zu schützenden Untergrund gewählt werden. Im allgemeinen wird die Komponente a. in der polymerisierten Schicht aus Kostengründen im Überschuss vorhanden sein. Besonders bevorzugt ist der Einsatz von 50-99 Gew.-% der polymerisierten Mischung a. im Vergleich zu b. Besonders bevorzugt sollte das Verhältnis a. : b. bei 60-90 : 40-10 Gew.-% liegen. Ganz besonders bevorzugt wird eine Mischung der Polymeren a. zu b. von 75-85 zu 25-15 Gew.-% herangezogen.

Im folgenden ist die Zusammensetzung weiterhin bevorzugter Polymerschichten dargestellt:
a.A: 20 - 100 Gew.-%, bevorzugt 30 - 100 Gew.-%, besonders bevorzugt 40 - 99 Gew.-%
a.B: 0 - 80 Gew-%, bevorzugt 0 - 70 Gew.-%, besonders bevorzugt 1 - 60 Gew.-%
a.C: 0 - 40 Gew-%, bevorzugt 0 - 35 Gew.-%, besonders bevorzugt 0 - 32 Gew.-%
Zuschlagsstoffe zu a.: 0 - 150 Gew-Teile, vorzugsweise 0 - 100 Gew.-Teile, besonders bevorzugt 0 - 50 Gew.-Teile.
b.A: 20 - 99 Gew-%, bevorzugt 30 - 99 Gew.-%, besonders bevorzugt 40 - 98 Gew.-%
b.B: 1 - 80 Gew-%, bevorzugt 1- 70 Gew.-%, besonders bevorzugt 2 - 60 Gew.-%
Zuschlagsstoffe zu b.: 1-150 Gew.-Teile, vorzugsweise 0 - 100 Gew.-Teile, besonders bevorzugt 0 - 50 Gew.-Teile.

Die angesprochenen Polymermischungen können nach dem Fachmann bekannten Methoden einzeln polymerisiert, vermengt und abschließend zur Oberflächenvergütung verwendet werden. Die Aufbringung der so hergestellten Polymerschicht auf das Substrat kann wiederum nach dem Fachmann bekannter Art und Weise erfolgen, wobei jedoch zur ausreichenden Ausbildung der kovalenten Oberflächenbindungen und der Interpenetration der Oberflächenpolymerstränge in das Substrat eine ausreichende Temperatur eingestellt wird. Diese liegt in der Regel oberhalb der Glastemperatur der aufzubringenden Polymerschicht. Insbesondere ist es vorteilhaft, wenn diese Temperatur signifikant oberhalb der Glastemperatur (T_{G}) eingestellt wird, d.h. eine Temperatur von >T_{G} + 20°C, besonders bevorzugt von >T_{G} +50°C und ganz besonders bevorzugt von >T_{G} +80°C.

Bevorzugte Verfahren zum Aufbringen der Oberflächenvergütung können dem allgemeinen Fachwissen entnommen werden (Henson, Plastics Extrusion Technology, Hanser Publishers, 2nd Edition, 1997). Bevorzugte Aufbringungsverfahren der Polymethacrylatschicht in Form einer Schmelze sind u.a. das Coextrusionsbeschichten oder das Schmelzbeschichten. Für das Aufbringen der Oberflächenvergütung in Form einer Folie kann die Colamination, die Extrusions-Kaschierung, das Verkleben, Coil-Coating, Ummantelung oder die Hochdrucklamination durchgeführt werden.

Zusätzlich zu den beschriebenen Maßnahmen kann es von Vorteil sein, zwischen der aufzubringenden polymethacrylatbasierten Schutzschicht und dem Werkstoff einen Kleber aufzubringen, d.h., dass man Schutzschichtseitig den Werkstoff vor Aufbringung der Schutzschicht mit einem Kleber behandelt. Dies ist insbesondere dann notwendig, wenn der zu vergütende Werkstoff nur unzureichend oder überhaupt nicht im Stande ist, chemische Bindungen zur oberflächenvergütenden Polymethacrylatschicht auszubilden. Erfindungsgemäß wird in solchen Fällen als zu vergütender Werkstoff der Ursprungswerkstoff samt Kleber verstanden.

Ein solcher Kleber sollte so beschaffen sein, dass er mit der Schutzschicht reaktive Wechselwirkungen dergestalt eingeht, dass kovalente Bindungen zwischen Schutzschicht und Kleber resultieren.

Derartige Kleber sind im Prinzip dem Fachmann bekannt.

Bevorzugte Klebermaterialien werden in Römpp Chemie Lexikon, Georg Thieme Verlag Stuttgart, 9. Auflage, 1990, band 3, S. 2252ff vorgeschlagen. Besonders bevorzugt im Rahmen der Erfindung sind Kleber ausgewählt aus der Gruppe enthaltend GMA-modifizierter Polyolefine, z.B. Elvalloy® AS, Fa. Dupont, sowie Ethylen-Vinylacetat-Copolymere (z.B. Mormelt® 902, Rohm and Haas Co.).

In einer weiteren Ausgestaltung der Erfindung beschäftigt sich diese mit den erfindungsgemäß hergestellten Verbundwerkstoffen. Prinzipiell können die Polymerschichten erfindungsgemäß auf alle, dem Fachmann für diesen Zweck in Frage kommende Werkstoffe aufgebracht werden. Als bevorzugt auszuwählende Materialien kommen in Betracht: Holz, Holzfunier, Papier, andere Polymermaterialien wie Polyolefine, Polystyrole, Polyvinyle, Polyester, Polyamide, künstlicher oder natürlicher Kautschuke, Metalle, duroplastische Materialien wie Hochdruckpressstoffplatten.

Die Substratmaterialien können als Folie, Folienzuschnitt, Platte oder Plattenzuschnitt vorliegen. In diesem Zusammenhang besonders hervorzuheben sind Substratmaterialien wie Polyethylen-Gewebe, welche z.B. in der Foliengewächshausindustrie eingesetzt werden.

Äußerst bevorzugte erfindungsgemäß hergestellte Verbundwerkstoffe enthalten dekorative Hochdruck-schichtpressstoffplatten (HPL) gemäß EN 438-6, welche aus Schichten von Faserstoffbahnen (z.B. Papier), imprägniert mit härtbaren Harzen, bestehen, die mittels des nachfolgend beschriebenen Hockdruckprozesses miteinander Verbunden werden. Die Oberflächenschicht des Werkstoffes, welche auf einer oder auf beiden Seiten dekorative Farben oder Muster haben, werden mit Harzen auf der Basis von Aminoplasten, z.B. Melaminharzen, imprägniert. Die während des Hochdruckprozesses in der Dekorschicht vorhandenen Amino- bzw. Methylolaminogruppen dienen dann als Reaktionspartner zur kovalenten Anbindung an die Polymethacrylatschicht (in diesem Fall Folien) zur Oberflächenvergütung.

Die erfindungsgemäß aufgebrachte Polymethacrylatschicht wird während des Hochdruckprozesses mit der Dekorschicht dauerhaft verbunden. Aufgrund der beim Prozess eingestellten Temperatur und der damit verbundenen Interpenetration des melaminhazgetränkten Dekorpapiers in die Folie wird die ausreichende Ausbildung von kovalenten Bindungen und damit eine dauerhafte Anbindung an den Werkstoff sichergestellt.

Der Hochdruckprozess ist definiert als die gleichzeitige Anwendung von Wärme (Temperatur größer/gleich 120 °C) und hohem Druck (größer/gleich 7 MPa), wodurch die härtbaren Harze fließen und anschließend aushärten, um einen homogenen, nicht porösen Werkstoff mit erhöhter Dichte (mind. 1,35 g/cm³) und der geforderten Oberflächenstruktur herzustellen.

Eine geeignete, insbesondere transparente, Außenschicht oder Beschichtung zwecks Oberflächenvergütung wird insbesondere bei Außenanwendungen hinzugefügt, um wetter- und lichtschützende Eigenschaften zu etablieren.

Bei den Polymerisaten und Copolymerisaten die als Bestandteil der Polymethacrylatschicht gemäß der Erfindung einsetzbar sind, handelt es sich um Substanzpolymerisate, Lösungspolymerisate, Emulsions- oder Suspensionspolymerisate mit ggf. bimodaler oder multimodaler Verteilung der Partikelgröße.

Eine bi-, mehr- oder multimodale Verteilung der Primärteilchengrößen der Polymethacrylatschicht im Sinne der Erfindung liegt dann vor, wenn eine Probe des als oder im der Polymethacrylatschicht eingesetzten Polymers und Copolymers bei einer Analyse nach der PIDS-Methode mit dem Laserpartikelanalysator Coulter LS230 unter Berücksichtigung der optischen Parameter der Partikel und der Suspensionsflüssigkeit (mindestens) zwei Peaks im Verteilungsspektrum aufweist. Insbesondere wird bei Bestimmung der Partikelgrößenverteilung die Größenverteilung von Primärteilchen in Dispersionen zugrundegelegt. Nach Trocknung der Dispersionen können die Primärteilchen aus der Dispersion zu Sekundärteilchen mit einer anderen Teilchengrößenverteilung agglomeriert sein.

Die bi- oder multimodalen Substanzpolymerisate, Lösungspolymerisate, Emulsions- oder Suspensionspolymerisate und -copolymerisate der Polymethacrylatschicht lassen sich grundsätzlich durch Polymerisation von Monomeren zu Polymerisaten mit bi- oder multimodaler Partikelgrößenverteilung erhalten oder durch Mischen von zwei oder mehr geeigneten monomodalen Substanzpolymerisaten, Lösungspolymerisaten, Emulsions- oder Suspensionspolymerisaten, die sich hinsichtlich der Partikelgrößenverteilung unterscheiden. Bei den monomodalen Polymerisaten wiederum kann es sich um Polymerisate handeln, die unmittelbar durch Substanz-, Lösungs-, Emulsions- oder Suspensionspolymerisation erhalten werden, es können aber auch Fraktionen dieser Polymerisate eingesetzt werden, die beispielsweise durch Abtrennung, zum Beispiel in einem Siebvorgang erhalten wurden.

Eine Variante zum Erhalt einer bi- oder multimodalen Polymermischung für eine erfindungsgemäße Polymethacrylatschicht sieht somit das Mischen von zwei oder mehr monomodal verteilten Dispersionen vor. Anschließend kann die Dispersionsmischung auf an sich bekannte Weise getrocknet werden, beispielsweise durch Sprühtrocknung, um so das Polymethacrylat zu isolieren. Alternativ kann es von Vorteil sein, durch geeignete Wahl von unterschiedlichen Saatlatices die benötigte Dispersion mit Teilchen von bi- oder multimodaler Größenverteilung durch Aufwachsen von Monomer auf die unterschiedlichen Saatlatices direkt herzustellen. Aufgrund der höheren Reproduzierbarkeit ist allerdings das Mischen von monomodalen Dispersionen deutlich bevorzugt. Die Mischung der Dispersionen kann zum Erhalt der Polymerisate und Copolymerisate z. B. sprühgetrocknet werden. Auch andere Möglichkeiten, Partikel aus Dispersionen zu isolieren, kommen selbstverständlich in Frage. Daneben können auch isolierte Polymerisate und Copolymerisate aus monomodalen Dispersionen gemischt werden.

Eine weitere Verbesserung der Eigenschaften erfindungsgemäßer Polymethacrylatschichten lässt sich unter anderem auch durch das Molekulargewicht der eingesetzten reaktiven Polymere und Copolymere erzielen. Eine bevorzugte Variante sieht vor, dass das Gewichtsmittel des Molekulargewichts M_{w} der Polymerisate und/oder Copolymerisate der "Reaktiv-Monomere"-enthaltenden (Meth)acrylate im Bereich 10000 bis >200000 g/mol ist.

Besonders vorteilhafte Eigenschaften der Polymethacrylatschichten erhält man, wenn das Gewichtsmittel des Molekulargewichts M_{w} der reaktiv-modifizierten Polymerisate und Copolymerisate im Bereich 15000 bis 150000 g/mol liegt.

Das Gewichtsmittel des Molekulargewichts M_{w} eines Polymeren wird für die Zwecke der Erfindung mittels SEC oder GPC (size exclusion chromatography oder gel permeations chromatography) gegenüber Standards aus Polystyrol bestimmt. Die SEC oder GPC sind dem Polymerfachmann bekannte Analysenmethoden zur Bestimmung der Mittelwerte des Molekulargewichts. Eine weitere im Rahmen der Erfindung anwendbare Größe zur Kennzeichnung der Molmasse der eingesetzten Polymerisate und Copolymerisate ist die Viskositätszahl VN. Die Viskositätszahl wird in Anlehnung an ISO 1628 bestimmt.

Erfindungsgemäße Polymethacrylatschichten enthalten somit in bevorzugter Ausführungsform Polymerisate und/oder Copolymerisate mit VN ≥ 10, vorzugsweise > 20, zweckmäßig > 30, besonders bevorzugt < 10000, ganz besonders bevorzugt < 80 und äußerst bevorzugt <70.

Das erfindungsgemäße Verfahren erlaubt die Herstellung von neuen Verbundwerkstoffen auf eine einfache und kostengünstige Art und Weise, wobei jedoch die Haftung der Vergütungsschicht, deren Transparenz und Witterungsbeständigkeit optimiert erscheint. Zumindest die Summe dieser vorteilhaften Eigenschaften mit dem beschriebenen Verfahren zu erlangen, war durch den Stand der Technik in keinster Weise nahegelegt.

### Beispiel 1a) (erfindungsgemäß):

Oberflächenvergütung von dekorativen Hochdruck-Schichtpreßplatten

Herstellung eines Copolymerisats aus MMA-Styrol-Maleinsäureanhydrid (75 : 15 : 10) (Komponente b)

Eine Monomermischung aus 6279 g Methylmethacrylat, 1256 g Styrol und 837 g Maleinsäureanhydrid wird mit 1,9 g tert.-Butylperneodecanoat und 0,84 g tert.-Butylperoxi-3,5,5-trimethylhexanoat als Polymerisationsinitiatoren und 20,9 g 2-Mercaptoethanol als Molekulargewichtsregler sowie mit 4,2 g Palmitinsäure versetzt.

Das resultierende Gemisch wird in eine Polymerisationskammer gefüllt und 10 Minuten entgast. Danach wird im Wasserbad 6 Stunden bei 60°C, nachfolgend 30 Stunden bei 55°C Wasserbadtemperatur polymerisiert. Nach Entfernung der Polymerisationskammer aus dem Wasserbad wird das Polymerisat in der Polymerisationskammer noch 7 Stunden bei 117°C im Luftschrank getempert.

Das resultierende Copolymerisat ist klar und nahezu farblos und besitzt eine V.N. (Lösungsviskositätszahl nach ISO 1628-6, 25°C, Chloroform) von 44,4 ml/g. Die Molekulargewichtsbestimmung per GPC unter Verwendung von PMMA-Eichstandards ergab:
Mn = 34.200 g/mol, Mw = 86.300 g/mol, Mw/Mn = 2,52. Die Fließfähigkeit des Copolymerisats wurde nach ISO 1133 bei 230°C und 3,8kg mit MVR = 4,85 cm3/10min bestimmt.

Dieses Copolymerisat wurde anschließend mittels einem Einschneckenextruderprozeß granuliert und entgast.

Die Herstellung der Schlagzähen PMMA-Formmasse (Komponente a) erfolgt gemäß DE 3842 796, Beispiel 1.

Herstellung der erfindungsgemäßen Folie:
Dieses granulierte und entgaste Copolymerisat (Komponente b.) wird mit Granulat einer Schlagzähen PMMA-Formmasse auf Basis Emulsionspolymerisat (Komponente a.) im Verhältnis 20 Teile Copolymerisat/80 Teile schlagzähe Formmasse gemischt und anschließend zu einer 40 µm dicken Folie mittels eines Einschneckenextruder und nachgeschalteter, für Folienextrusion ausgelegter Extrusionsdüse, extrudiert (Chill-Roll Extrusion).

Herstellung des erfindungsgemäßen Verbundwerkstoffes:
Erfolgt mit dem auf den Seite 14 beschriebenen Hochdruckprozess bei einer Temperatur von 140°C und einem Druck von 10 N/mm².

Bewertung der vorteilhaften Eigenschaften der Erfindung:
Gitterschnitt gemäß ISO 2409: keine Ablösung (GT 0), gerade Schnittkante
Kochtest (2h/100°C): keine Ablösung
Warmwassertest (48h/65°C): keine Ablösung

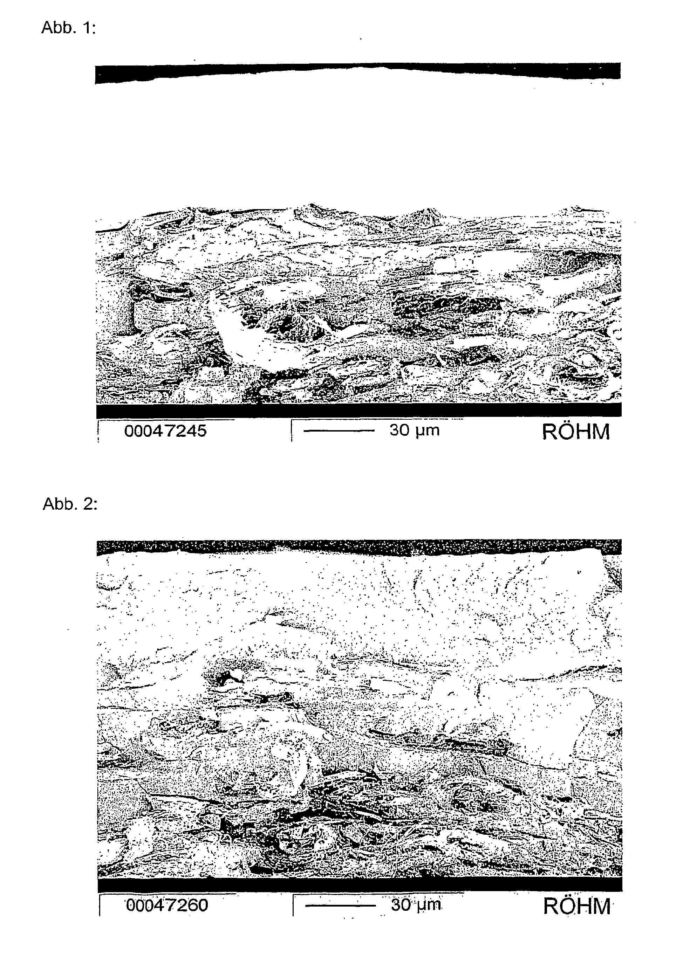

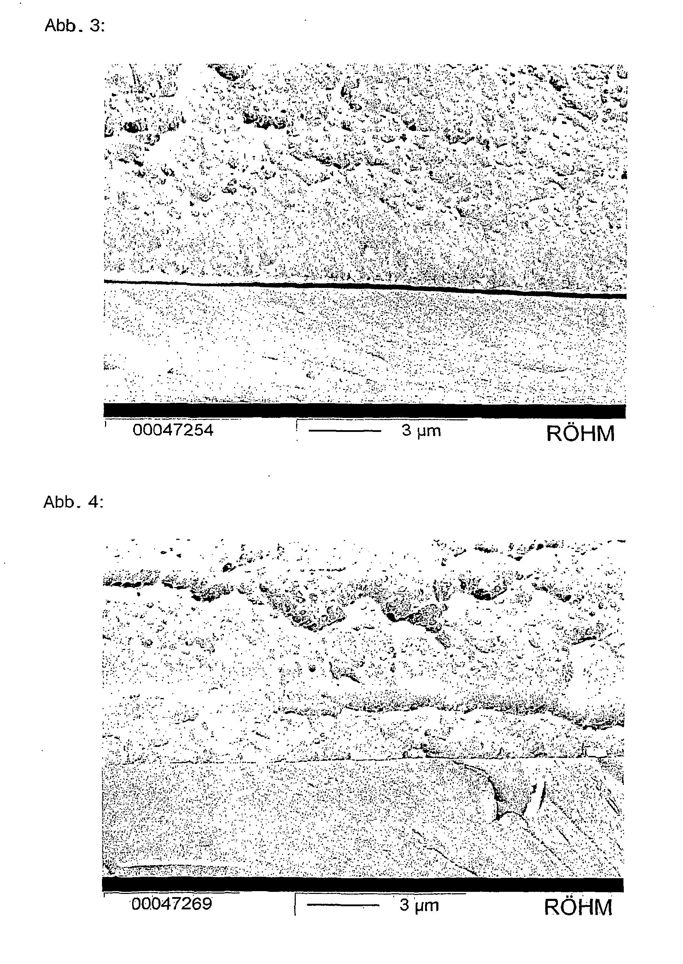

Zusätzlich werden die vorteilhaften Eigenschaften der Erfindung durch rasterelektronenmikroskopische (REM)-Aufnahmen der Bruchkante eines bei Raumtemperatur gebrochenenProbekörpers untermauert: REM-Aufnahmen Bilder 260 (Abb. 2) und 269 (Abb. 4); einwandfreie Haftung der 40 µm dicken Folie

### Beispiel 1b; Vergleichsbeispiel

Vorgehensweise analog Beispiel 1a), jedoch Verzicht auf die Zugabe von Komponente b.

Eigenschaften hierzu im Vergleich:
Gitterschnitt: signifikante Ablösung (GT 2), ausgefranste Schnittkante
Kochtest: deutliche Ablösung
Warmwassertest: deutliche Ablösung
Siehe hierzu REM-Aufnahmen 245 (Abb. 1) und 254 (Abb. 3); deutlich sichtbare Ablösung der Folie während des Probekörperbrechens

### Beispiel 2, Oberflächenvergütung von PE-basierenden Foliengeweben

Herstellung eines Copolymerisats aus MMA-Methylacrylat-Methacrylsäure (88 : 4:8):

Eine Monomermischung aus 7040 g Methylmethacrylat, 640 g Methacrylsäure und 320 g Methylacrylat wird mit 2,4 g tert.-Butylperneodecanoat als Polymerisationsinitiator und 44,0 g 2-Ethylhexylthioglycolat als Molekulargewichtsregler versetzt.

### Das resultierende Gemisch wird in eine Polymerisationskammer gefüllt und 10 Minuten entgast. Danach wird im Wasserbad 30 Stunden bei 50°C Wasserbadtemperatur polymerisiert. Nach Entfernung der Polymerisationskammer aus dem Wasserbad wird das Polymerisat in der Polymerisationskammer noch 10 Stunden bei 120°C im Luftschrank getempert.

Das resultierende Copolymerisat ist klar und nahezu farblos und besitzt eine V.N. (Lösungsviskositätszahl nach ISO 1628-6, 25°C, Chloroform) von 44,9 ml/g.

Dieses Copolymerisat (Komponente b.) wurde anschließend mittels eines Einschneckenextruderprozesses granuliert und entgast.

Die Herstellung der Schlagzähen PMMA-Formmasse (Komponente a) erfolgt gemäß DE 3842 796, Beispiel 1.

Herstellung der erfindungsgemäßen Folie:

Dieses granulierte und entgaste Copolymerisat (Komponente b) wird mit Granulat einer schlagzähen PMMA-Formmasse auf Basis eines Emulsionspolymerisat (Komponente a) im Verhältnis 40 Teile Copolymerisat/60 Teile schlagzähe Formmasse gemischt und anschließend zu einer 45 µm dicken Folie mittels eines Einschneckenextruder und nachgeschalteter, für Folienextrusion ausgelegter Extrusionsdüse, extrudiert (Chill-Roll Extrusion).

Herstellung des erfindungsgemäßen Verbundwerkstoffes:

In einer für Folienbeschichtung und Foliencolamination ausgelegten Extrusionsbeschichtungsanlage wurde die erfindungsgemäße Folie mit dem PE-basierenden Foliengewebesubstrat mittles der Verwendung des thermoplastischen Ethylen/Vinylacetat-Copolymerbasierenden Hotmeltklebers Mormelt® 902 (Schmelzetemperatur von ca. 220 °C) beschichtet.

Der hergestellte Folienverbundwerkstoff zeigt in den unter Beispiel beschriebenen Haftungsuntersuchungen keinerlei Delamination.

## Patentansprüche

1. Verfahren zur Oberflächenvergütung von Werkstoffen, wobei die Oberflächenvergütung aus mindestens einer thermoplastischen Polymethacrylatschicht basiert, welche erhältlich ist durch:
Vermischen von Polymerisaten ausgehend von polymerisierten Monomermischungen a. und b.,
wobei a. aufweist:
A) 20 bis 100 Gew.-% Methylmethacrylat,
B) 0 bis 80 Gew.-% eines von Methylmethacrylat verschiedenen (Meth)acrylats der Formel I, 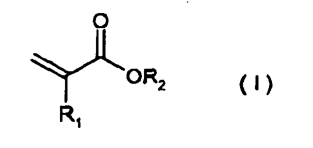 worin
R₁ für Wasserstoff oder Methyl und
R₂ für einen linearen oder verzweigten Alkylrest oder Cycloalkylrest mit 1 bis 18 Kohlenstoffatomen oder für Phenyl oder Naphthyl steht,
C) 0 bis 40 Gew.-% eines weiteren von a.A) und a.B) verschiedenen mit diesen jedoch copolymerisierbaren ungesättigten Monomers und
wobei (a.A) bis (a.C) zusammen 100 Gew.-% ergeben, und zu 100 Gew.-Teilen dieser polymerisierten Mischung
0-80 Gew.-Teile weiterer Polymere sowie üblich Zuschläge in Mengen von 0 bis
150 Gew.-Teilen zugegeben werden;
und b. aufweist: 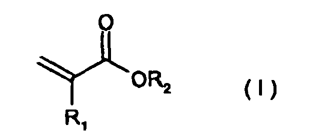
A) 20 bis 99 Gew.-% eines Methyl(meth)acrylats der Formel I,
worin
R₁ für Wasserstoff oder Methyl und
R₂ für einen linearen oder verzweigten Alkylrest oder Cycloalkylrest mit 1 bis 18 Kohlenstoffatomen oder für Phenyl oder Naphthyl steht,
B) 1 bis 80 Gew.-% eines oder mehrerer ethylenisch ungesättigter von b.A)
unterschiedlicher mit (b.A) copolymerisierbarer "Reaktiv-Monomere", wobei (b.A) und (b.B) zusammen 100 Gew.-% ergeben und zu 100 Gew.-Teilen dieser polymerisierten Mischung
0-80 Gew.-Teile weiterer Polymere sowie übliche Zuschläge in Mengen von 0 bis 150 Gew.-Teilen zugegeben werden;
und man die Polymethacrylatschicht auf den Werkstoff bei Temperaturen aufbringt, die es erlauben eine chemische Verbindung der Polymethacrylatschicht mit dem Werkstoff herzustellen.

2. Verfahren nach Anspruch 1,
**dadurch gekennzeichnet, dass**
man die Oberflächenvergütung in Form einer Schmelze mittels Coextrusionsbeschichten oder Schmelzbeschichten durchführt.

3. Verfahren nach Anspruch 1, und/oder 2,
**dadurch gekennzeichnet, dass**
man die Oberflächenvergütung in Form einer Folie mittels Colamination, Extrusions-Kaschierung, Verkleben, Coil-Coating, Ummantelung oder Hochdrucklamination durchführt.

4. Verfahren einem oder mehreren der Ansprüche 1 bis 3,
**dadurch gekennzeichnet, dass**
man den Werkstoff vor Aufbringung der Oberflächenvergütung mit einem Kleber behandelt.

5. Verfahren einem oder mehreren der Ansprüche 1 bis 4,
**dadurch gekennzeichnet, dass** die Oberflächenvergütung zusätzlich Polymere enthält ausgewählt aus der Gruppe Polyvinylidendifluorid, PVC, Polyethylen, Polyester oder Polyamide.

6. Verbundwerkstoffe hergestellt nach einem Verfahren gemäß den vorhergehenden Ansprüchen.

## Claims

1. Process for the surface finishing of materials, where the surface finishing is based on at least one thermoplastic polymethacrylate layer which is obtainable via:
mixing of polymers for which the basis is provided by polymerized monomer mixtures a. and b.,
where a. comprises:
A) from 20 to 100% by weight of methyl methacrylate,
B) from 0 to 80% by weight of a (meth)acrylate of the formula I, other than methyl methacrylate, 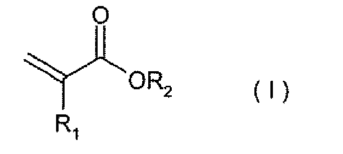 where
R₁ is hydrogen or methyl and
R₂ is a linear or branched alkyl radical or cycloalkyl radical having from 1 to 18 carbon atoms or is phenyl or naphthyl,
C) from 0 to 40% by weight of a further unsaturated monomer other than a.A) and a.B), but copolymerizable with these, where (a.A) to (a.C) together give 100% by weight, and from 0 to 80 parts by weight of further polymers, and also amounts of from 0 to 150 parts by weight of conventional additives, are added to 100 parts by weight of this polymerized mixture;
and b. comprises: 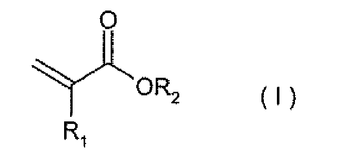
A) from 20 to 99% by weight of a methyl (meth)acrylate of the formula I
where
R₁ is hydrogen or methyl and
R₂ is a linear or branched alkyl radical or cycloalkyl radical having from 1 to 18 carbon atoms, or is phenyl or naphthyl,
B) from 1 to 80% by weight of one or more ethylenically unsaturated "reactive monomers" other than b.A) but copolymerizable with (b.A), where (b.A) and (b.B) together give 100% by weight, and
from 0 to 80 parts by weight of further polymers, and also amounts of from 0 to 150 parts by weight of conventional additives, are added to 100 parts by weight of this polymerized mixture;
and the polymethacrylate layer is applied to the material at temperatures which permit chemical bonding of the polymethacrylate layer to the material.

2. Process according to Claim 1,
**characterized in that**
the surface-finishing method applies a melt by means of coextrusion coating or melt coating.

3. Process according to Claim 1 and/or 2, **characterized in that**
the surface-finishing method applies a film by means of colamination, extrusion lamination, adhesive bonding, coil coating, sheathing or highpressure lamination.

4. Process according to one or more of Claims 1 to 3, **characterized in that**
the material is treated with an adhesive prior to application of the surface finish.

5. Process according to one or more of Claims 1 to 4, **characterized in that**
the surface finish also comprises polymers selected from the group of polyvinylidene difluoride, PVC, polyethylene, polyester or polyamides.

6. Composite materials produced by a process according to the preceding claims.

## Revendications

1. Procédé pour le traitement de surfaces de matériaux, le traitement de surface étant à base d'au moins une couche de polyméthacrylate thermoplastique, qui peut être obtenue par :
mélange de produits de polymérisation obtenus à partir de mélanges de monomères a. et b. polymérisés
a. comportant :
A) 20 à 100 % en poids de méthacrylate de méthyle,
B) 0 à 80 % en poids d'un (méth)acrylate différent du méthacrylate de méthyle, de formule I, 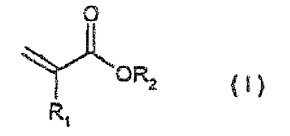 dans laquelle
R₁ représente un atome d'hydrogène ou le groupe méthyle et
R₂ représente un radical alkyle linéaire ou ramifié ou cycloalkyle ayant de 1 à 18 atomes de carbone ou le radical phényle ou naphtyle,
C) 0 à 40 % en poids d'un autre monomère insaturé différent de a.A) et a.B) mais copolymérisable avec ceux-ci et
(a.A) à (a.C) faisant ensemble 100 % en poids, et on ajoute à 100 parties en poids de ce mélange polymérisé 0-80 parties en poids d'autres polymères ainsi que des additifs usuels en quantités de 0 à 150 parties en poids ;
et b. comportant
A) 20 à 99 % en poids d'un (méth)acrylate de méthyle de formule I, 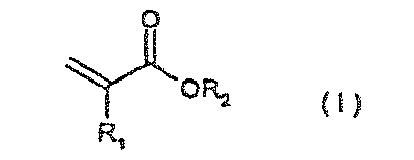 dans laquelle
R₁ représente un atome d'hydrogène ou le groupe méthyle et
R₂ représente un radical alkyle linéaire ou ramifié ou cycloalkyle ayant de 1 à 18 atomes de carbone ou le radical phényle ou naphtyle,
B) 1 à 80 % en poids d'un ou plusieurs « monomères réactifs » à insaturation éthylénique, différents de b.A), copolymérisables avec (b.A), (b.A) et (b.B) faisant ensemble 100 % en poids et on ajoute à 100 parties en poids de ce mélange polymérisé 0-80 parties en poids d'autres polymères ainsi que des additifs usuels en quantités de 0 à 150 parties en poids ;
et on applique la couche de polyméthacrylate sur le matériau à des températures qui permettent une liaison chimique de la couche de polyméthacrylate avec le matériau.

2. Procédé selon la revendication 1, **caractérisé en ce que** le traitement de surface est effectué sous forme d'une masse fondue, au moyen d'enduction par coextrusion ou d'enduction par fusion.

3. Procédé selon la revendication 1 et/ou la revendication 2, **caractérisé en ce qu'**on effectue le traitement de surface sous forme d'une film par co-stratification, contre-collage par extrusion, collage, enduction de ruban continu (Coil-Coating), enrobage ou stratification sous haute pression.

4. Procédé selon une ou plusieurs des revendications 1 à 3, **caractérisé en ce qu'**avant le traitement de surface on traite le matériau par une colle.

5. Procédé selon une ou plusieurs des revendications 1 à 4, **caractérisé en ce que** le traitement de surface contient en outre des polymères choisis dans le groupe constitué par le poly(difluorure de vinylidène), le PVC, le polyéthylène, les polyesters ou les polyamides.

6. Matériaux composites produits conformément à un procédé selon les revendications précédentes.
